# DEMANDE DE BREVET EUROPEEN

(11) **EP 4 732 981 A1**
(43) Date de publication de la demande: **29.04.2026**
(21) Numéro de dépôt: 25210167.0
(22) Date de dépôt: 21.10.2025
(51) Int. Cl.: B23K 20/12, B33Y 30/00, B33Y 40/00

(54) **SYSTÈME DE FABRICATION D'UN OBJET MANUFACTURÉ PAR FABRICATION ADDITIVE PAR FRICTION MALAXAGE ET INSTALLATION ASSOCIÉE**

(30) Priorité: 22.10.2024 FR 2411478
(71) Demandeur: Dassault Aviation, 92210 Saint-Cloud (FR)
(72) Inventeur: LE GALLIC, Joël, 64205 BIARRITZ CEDEX (FR); RIOTORT, Hugues, 64205 BIARRITZ CEDEX (FR)
(74) Mandataire: Lavoix

(57) **Abrégé**

Le système (24) de fabrication comprend :
- un dispositif de malaxage (26) ;
- un effecteur (40) comprenant un mécanisme (44) d'avance de l'étiré de matériau de fabrication configurable dans :
a) une première configuration dans laquelle un premier organe de préhension saisit l'étiré et le déplace dans une direction d'alimentation (DA) pendant qu'un deuxième organe de préhension lâche l'étiré et se déplace dans une direction (DB) opposée à la direction d'alimentation (DA) ;
b) une deuxième configuration dans laquelle le deuxième organe de préhension saisit l'étiré et le déplace dans la direction d'alimentation (DA) pendant que le premier organe de préhension lâche l'étiré et se déplace dans la direction (DB) opposée à la direction d'alimentation (DA) ;

le mécanisme d'avance (44) étant destiné à alterner entre la première configuration et la deuxième configuration.

## Description

La présente invention concerne un système de fabrication d'un objet manufacturé par fabrication additive par friction-malaxage à partir d'un étiré de matériau de fabrication, l'étiré de matériau de fabrication étant notamment initialement enroulé sous la forme d'une bobine.

On connaît de l'état de la technique des installations comprenant un système de fabrication additive par friction-malaxage et un système d'alimentation du système de fabrication en matériau de fabrication.

Il est connu que le système d'alimentation comprenne un barillet ou un chargeur dans lequel est installé une pluralité de barreaux de matériau de fabrication de section droite carrée. Ces barreaux de matériau de fabrication sont déchargés les uns après les autres du barillet ou du chargeur pour alimenter le système de fabrication. Dans de telles installations, le barreau founi au système de fabrication est ensuite introduit dans un pion de malaxage pour être malaxé afin de fabriquer l'objet manufacturé.

Toutefois, l'utilisation de tels barillet ou chargeur présente plusieurs inconvénients.

Tout d'abord, la préparation des barreaux destinés à être chargés dans de tels barillet ou chargeur est longue et fastidieuse. En effet, chacun de ces barreaux doit présenter des dimensions précises complémentaire de dimensions d'une chambre du barillet ou du chargeur dans laquelle il est destiné à être inséré. En outre, leur gestion et leur traçabilité complexes nécessitent un marquage rigoureux et clair pour éviter toute confusion puisque ces barreaux sont généralement nombreux et morphologiquement identiques. Egalement, dans le cas de l'utilisation de barreaux, le respect des sens de fibrage des découpes ayant mené à ces barreaux est également important et cela entraîne des chutes importantes de matière non utilisables.

En outre, bien que les barreaux soient de sections importantes (avec une surface typiquement supérieure à 9x9 mm), ils présentent une longueur limitée par les dimensions des barillets/chargeurs. Ainsi, ces barillets ou chargeurs doivent être fréquemment rechargés en barreaux par un opérateur humain. Ceci complexifie la fabrication de l'objet et représente un risque pour l'opérateur.

Par ailleurs, les sections importantes de barreaux conduisent à un malaxage par un pion d'autant plus large (présentant un diamètre d'environ 50 mm notamment), ce qui est pénalisant pour la dépose de raidisseurs sur des pièces structurales aéronautiques, car cela implique ensuite des usinages conséquents et des pertes de matière supplémentaires.

Egalement, la section droite carrée des barreaux réduit l'homogénéité de l'ajout de matière ayant lieu lors de la fabrication additive par friction-malaxage en sortie du pion de malaxage, qui lui est généralement cylindrique ou tronconique. En effet, la perte de charge lors du fluage de la matière n'est alors pas uniforme, avant que cette dernière ne rejoigne la périphérie du pion. En outre, la chaleur générée par frottement est maximum là où la distance à parcourir par la matière est minimum, ce qui augmente les irrégularités des bordures et les possibles éjections parasites de matière.

La transition entre deux barreaux successifs lors de la fabrication présente un risque important d'introduction de défauts. Cette transition peut notamment entraîner un manque de matière lors de la fabrication, une non tenue d'un restant du barreau en cours de consommation lors des relevages réguliers du pion de malaxage ou une inhomogénéité de la fluidité de la matière ajoutée lors de la fabrication.

La demande FR 23 07287 décrit une installation de fabrication d'un objet manufacturé par fabrication additive par friction-malaxage, simple, rapide et efficace, qui présente moins de risques pour un opérateur destiné à interagir avec elle et qui mène à la fabrication d'un objet de qualité supérieure.

En particulier, grâce à l'utilisation de bobines de matériau de fabrication, le matériau de fabrication peut être fourni au système de fabrication de manière continue en ne nécessitant aucun débitage et suivi d'opérateurs pour l'approvisionnement en matériau de fabrication.

De plus, avec l'utilisation de bobines de matériau de fabrication, la section de la matière malaxée est réduite et donc de celle du pion de malaxage également. Cette largeur de dépose est ainsi bien plus adaptée aux pièces aéronautiques, en particulier lors de déposes de raidisseurs ou de réparations de criques. Il en découle aussi une meilleure homogénéité de la température au malaxage.

Toutefois, il est observé que la fourniture en continue du matériau de fabrication au système de fabrication ne suffit pas à assurer une fabrication irréprochable. En particulier, les insuffisances ponctuelles dans l'ajout de matière sont susceptibles d'introduire des défauts structurels dans l'objet manufacturé. Ceci nuit à la qualité de l'objet manufacturé obtenu.

Un but de l'invention est alors de proposer un système de fabrication d'un objet manufacturé par fabrication additive par friction-malaxage à partir d'un étiré de matériau de fabrication, permettant d'améliorer la qualité de l'objet manufacturé obtenu.

A cet effet, l'invention a pour objet un système de fabrication d'un objet manufacturé par fabrication additive par friction-malaxage à partir d'un étiré de matériau de fabrication comprenant :
- un dispositif de malaxage comprenant un pion de malaxage destiné à malaxer l'étiré de matériau de fabrication pour fabriquer l'objet manufacturé ;
- un effecteur configuré pour entraîner en rotation le pion de malaxage et pour alimenter le pion de malaxage en étiré de matériau de fabrication par translation de l'étiré de matériau de fabrication selon un axe longitudinal de l'effecteur dans une direction d'alimentation ;

l'effecteur comprenant un dispositif d'actionnement comportant un mécanisme d'avance de l'étiré de matériau de fabrication, le mécanisme d'avance comprenant un premier dispositif de préhension et un deuxième dispositif de préhension,
le mécanisme d'avance étant configurable dans :
   a) une première configuration dans laquelle au moins un premier organe de préhension du premier dispositif de préhension saisit l'étiré et le déplace dans la direction d'alimentation pendant qu'au moins un deuxième organe de préhension du deuxième dispositif de préhension lâche l'étiré et se déplace dans une direction opposée à la direction d'alimentation ;
   b) une deuxième configuration dans laquelle l'au moins un deuxième organe de préhension saisit l'étiré et le déplace dans la direction d'alimentation pendant que l'au moins un premier organe de préhension lâche l'étiré et se déplace dans la direction opposée à la direction d'alimentation ;
le mécanisme d'avance étant destiné à alterner entre la première configuration et la deuxième configuration pour déplacer l'étiré de matériau de fabrication en translation selon l'axe longitudinal dans la direction d'alimentation.

Grâce à l'invention, une fabrication sans défauts structuraux est rendue possible par un débit d'ajout de matière ininterrompu et réglable au niveau du pion de malaxage. En particulier, grâce à l'invention, l'effecteur est en mesure d'alimenter le pion de malaxage en matériau de fabrication de façon à combler précisément l'espace correspondant à une couche de dépôt, le malaxage se faisant couche après couche. Ceci permet d'éviter l'introduction de défaut dans l'objet manufacturé et permet d'obtenir des pièces de meilleure qualité.

Suivant d'autres aspects avantageux de l'invention, le système de fabrication comprend une ou plusieurs des caractéristiques suivantes, prises isolément ou suivant toutes les combinaisons techniquement possibles :
- le système de fabrication est tel que :
   - l'au moins un premier organe de préhension est déplaçable en translation selon l'axe longitudinal entre une première coordonnée proximale et une première coordonnée distale ;
   - l'au moins un deuxième organe de préhension est déplaçable en translation selon l'axe longitudinal entre une deuxième coordonnée proximale et une deuxième coordonnée distale ;
   la première coordonnée proximale étant située en aval de la deuxième coordonnée distale selon la direction d'alimentation ;
- l'au moins un premier et l'au moins un deuxième organes de préhension, sont des pinces configurables en :
   - configuration de serrage, dans laquelle les pinces serrent l'étiré ; et
   - configuration de libération, dans laquelle les pinces libèrent l'étiré ;
      les pinces étant dans :
      - la configuration de serrage lorsque l'organe de préhension correspondant est déplacé dans la direction d'alimentation ; et
      - la configuration de libération lorsque l'organe de préhension correspondant est déplacé dans la direction opposée à la direction d'alimentation ;
- les pinces comprennent chacune :
   - une base comportant une jupe cylindrique, la jupe cylindrique comprenant une surface interne conique définissant un passage conique s'étendant sensiblement selon l'axe longitudinal et à travers lequel l'étiré est destiné à s'étendre ;
   - au moins deux éléments de serrage s'étendant au moins en partie dans le passage conique entre la surface interne conique de la jupe cylindrique et l'étiré, chaque élément de serrage comprenant une surface externe conique sensiblement complémentaire de la surface interne conique de la jupe cylindrique ;
   - un élément de contrainte apte à contraindre les au moins deux éléments de serrage contre la jupe cylindrique ;

chaque pince étant telle que :
   - dans la configuration de serrage, l'élément de contrainte contraint les au moins deux éléments de serrage contre la jupe cylindrique de sorte que chaque élément de serrage est contraint contre l'étiré pour serrer l'étiré ;
   - dans la configuration de libération, l'élément de contrainte réduit sa contrainte sur les au moins deux éléments de serrage de sorte que chaque élément de serrage relâche l'étiré ;
      - les éléments de serrage comprennent une surface interne destinée à être en regard de l'étiré et à coopérer avec l'étiré dans la configuration de serrage, la surface interne de chaque élément de serrage comprenant des dents aptes à accrocher l'étirer ;
      - les éléments de serrage sont répartis angulairement autour de l'axe longitudinal ;
      - le système de fabrication est tel que :
   - le premier dispositif de préhension comporte en outre :
      - une première bride distale sur laquelle est monté l'au moins un premier organe de préhension ;
      - au moins une première crémaillère montée sur la première bride distale et s'étendant sensiblement parallèlement à l'axe longitudinal ;
   - le deuxième dispositif de préhension comporte en outre :
      - une deuxième bride distale sur laquelle est monté l'au moins un deuxième organe de préhension ;
      - au moins une deuxième crémaillère montée sur la deuxième bride distale et s'étendant sensiblement parallèlement à l'axe longitudinal ;
   - le mécanisme d'avance comprend en outre au moins une roue dentée, chaque roue dentée comprenant des dents coopérant avec des dents de la première crémaillère correspondante et des dents de la deuxième crémaillère correspondante, chaque roue dentée étant mobile en rotation selon un axe de rotation sensiblement perpendiculaire à un plan comprenant l'axe longitudinal ;
   - le dispositif d'actionnement comprend en outre un mécanisme d'actionnement configurable entre :
      - une première configuration dans laquelle le mécanisme d'actionnement déplace l'au moins une deuxième crémaillère en translation dans la direction opposée à la direction d'alimentation pour déplacer simultanément :
         - le deuxième dispositif de préhension dans la direction opposée à la direction d'alimentation ;
         - le premier dispositif de préhension dans la direction d'alimentation, par coopération de l'au moins une deuxième crémaillère avec l'au moins une première crémaillère par l'intermédiaire de l'au moins une roue dentée ;
      - une deuxième configuration dans laquelle le mécanisme d'actionnement déplace l'au moins une deuxième crémaillère en translation dans la direction d'alimentation pour déplacer simultanément :
         - le deuxième dispositif de préhension dans la direction d'alimentation;
         - le premier dispositif de préhension dans la direction opposée à la direction d'alimentation, par coopération de l'au moins une deuxième crémaillère avec l'au moins une première crémaillère par l'intermédiaire de l'au moins une roue dentée ;
le mécanisme d'avance étant :
   - dans sa première configuration lorsque le mécanisme d'actionnement est dans sa première configuration ;
   - dans sa deuxième configuration lorsque le mécanisme d'actionnement est dans sa deuxième configuration ;
le mécanisme d'actionnement étant configuré pour alterner entre sa première et sa deuxième configuration pour déplacer l'étiré de matériau de fabrication en translation selon l'axe longitudinal dans la direction d'alimentation ;
   - le système de fabrication est tel que :
      - le premier dispositif de préhension comporte en outre une première bride proximale, l'au moins une première crémaillère étant montée en outre sur la première bride proximale ;
      - le deuxième dispositif de préhension comporte en outre une deuxième bride proximale, l'au moins une deuxième crémaillère étant montée en outre sur la deuxième bride proximale ;
la première bride proximale comprenant un corps annulaire délimitant un passage axial traversé par le deuxième dispositif de préhension ;
   - le mécanisme d'avance comprend un support fixe en translation selon l'axe longitudinal, comportant une jupe s'étendant sensiblement selon l'axe longitudinal, la jupe du support fixe s'étendant radialement entre le premier dispositif de préhension et le deuxième dispositif de préhension, chaque roue dentée étant montée sur la jupe du support fixe ;
   - le mécanisme d'actionnement du dispositif d'actionnement est en outre configuré pour entraîner le mécanisme d'avance et le pion de malaxage en rotation autour de l'axe longitudinal ;
   - le mécanisme d'actionnement comprend :
      - un actionneur ;
      - un arbre s'étendant sensiblement selon l'axe longitudinal et apte à être entraîné en rotation autour de l'axe longitudinal et en translation selon l'axe longitudinal par l'actionneur ;
      - un flasque monté sur l'arbre et s'étendant sensiblement perpendiculairement à l'axe longitudinal ;
      - au moins une tige solidaire en rotation du flasque et s'étendant sensiblement parallèlement à l'axe longitudinal à travers le premier dispositif de préhension, à travers le deuxième dispositif de préhension et au moins en partie à travers le dispositif de malaxage ;
le mécanisme d'avance et le pion de malaxage étant aptes à être entraînés en rotation autour de l'axe longitudinal par la rotation de l'au moins une tige autour de l'axe longitudinale ;
   - l'au moins une deuxième crémaillère est montée sur le flasque, le mécanisme d'actionnement étant tel que :
      - dans la première configuration du mécanisme d'actionnement, l'actionneur entraîne l'au moins une deuxième crémaillère en translation dans la direction opposée à la direction d'alimentation en déplaçant l'arbre et le flasque en translation dans la direction opposée à la direction d'alimentation ;
      - dans la deuxième configuration du mécanisme d'actionnement, l'actionneur entraîne l'au moins une deuxième crémaillère en translation dans la direction d'alimentation en déplaçant l'arbre et le flasque en translation dans la direction d'alimentation ;
   - le mécanisme d'actionnement est configuré pour entraîner les premier et deuxième dispositifs de préhension en rotation autour de l'axe longitudinal, et dans lequel :
      - l'étiré est destiné à être entraîné en rotation autour de sa fibre neutre par l'au moins un premier organe de préhension dans la première configuration du mécanisme d'avance ;
      - l'étiré est destiné à être entraîné en rotation autour de sa fibre neutre par l'au moins un deuxième organe de préhension dans la deuxième configuration du mécanisme d'avance ;
   - l'effecteur comprend en outre :
      - un carter externe délimitant un espace interne dans lequel s'étend le mécanisme d'avance;
      - un palier s'étendant entre le mécanisme d'avance et le carter externe et configuré pour guider le mécanisme d'avance en rotation par rapport au carter externe ;
   - l'effecteur comprend en outre un palier s'étendant entre le dispositif de malaxage et le carter externe et configuré pour guider le dispositif de malaxage en rotation par rapport au carter externe ;
   - l'effecteur comprend en outre au moins un capteur d'effort configuré pour mesurer une force d'appui générée par le pion de malaxage sur un substrat ;
   - le système de fabrication comprend en outre un dispositif de lubrification du palier s'étendant entre le dispositif de malaxage et le carter externe ;
   - le système de fabrication comprend en outre un dispositif de soufflage de gaz inerte, configuré pour générer un flux de gaz inerte autour du pion de malaxage lors du malaxage de l'étiré de matériau de fabrication ;
   - le système de fabrication comprend en outre un dispositif de refroidissement du dispositif de malaxage ;
   - le système de fabrication comprend en outre un dispositif de refroidissement du dispositif d'actionnement, notamment du mécanisme d'actionnement.

En outre, l'invention concerne une installation de fabrication d'un objet manufacturé, comprenant :
- un système de fabrication tel que décrit ci-dessus ;
- un système d'alimentation configuré pour alimenter le système de fabrication en étiré de matériau de fabrication ;
le système d'alimentation étant configuré pour entraîner l'étiré en rotation autour de sa fibre neutre.

Optionnellement, le système d'alimentation comprend :
- une bobine d'étiré de matériau de fabrication ;
- un dispositif de déroulement rotatif configuré pour dérouler l'étiré de matériau de fabrication depuis la bobine ;
- un dispositif de guidage de l'étiré de matériau de fabrication déroulé sans être débité depuis le dispositif de déroulement rotatif jusqu'au système de fabrication,
le dispositif de déroulement rotatif étant configuré pour entraîner la bobine en rotation autour d'un axe de rotation principal et pour entraîner l'étiré déroulé en rotation autour de sa fibre neutre.

Optionnellement, une différence entre la vitesse de rotation de la bobine générée par le système d'alimentation de l'installation et la vitesse de rotation de l'étiré générée par l'effecteur est comprise entre 0,5 tr/min et 5 tr/min lorsque l'étiré 1 est malaxé par le système de fabrication.

L'invention apparaîtra plus clairement à la lecture de la description qui va suivre, donnée uniquement à titre d'exemple non limitatif, et faite en référence aux dessins dans lesquels :
[Fig. 1] la figure 1 est une vue en perspective de dessus d'une installation de fabrication selon l'invention ;
[Fig. 2] la figure 2 est une vue en perspective de dessus d'un système de fabrication de l'installation de fabrication de la figure 1, selon un premier mode de réalisation de l'invention ;
[Fig. 3] la figure 3 est une vue en coupe du système de fabrication de la figure 2, selon un plan de coupe III-III comprenant l'axe longitudinal de l'effecteur ;
[Fig. 4] la figure 4 est une illustration agrandie d'une partie IV de la figure 3 ;
[Fig. 5] la figure 5 est une vue en coupe du système de fabrication de la figure 2, selon un plan de coupe V-V sensiblement perpendiculaire à l'axe longitudinal de l'effecteur ;
[Fig. 6] la figure 6 est une vue en perspective d'un organe de préhension d'un dispositif de préhension du système de fabrication de la figure 2, dans lequel les éléments de serrage dudit organe de préhension sont déportés axialement à l'écart du passage conique dudit organe de préhension de façon exagérée ;
[Fig. 7] la figure 7 est illustration schématique simplifiée d'une portion d'un système de fabrication de l'installation de fabrication de la figure 1, selon un deuxième mode de réalisation de l'invention.

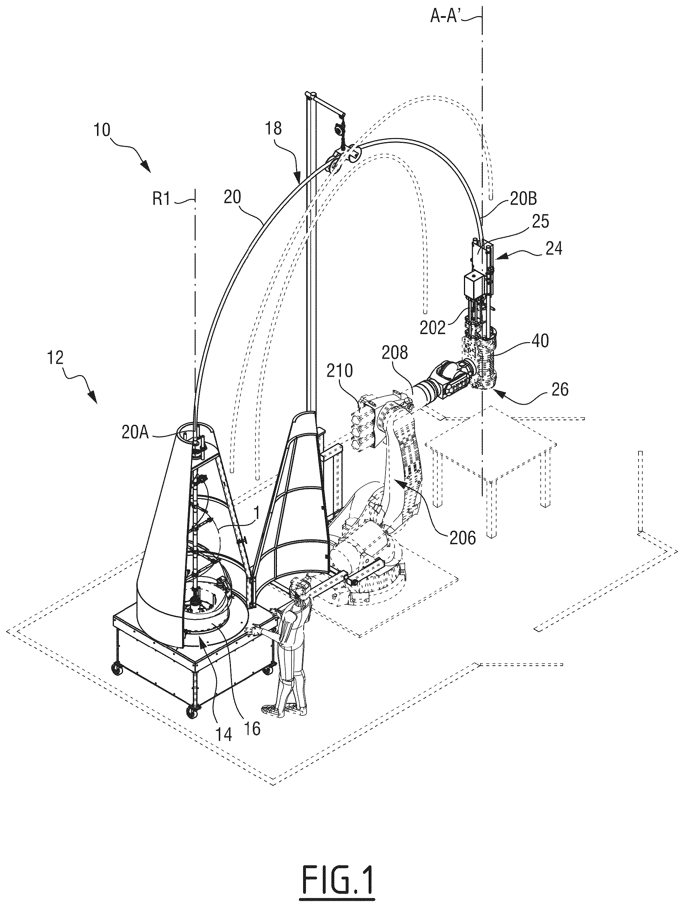

En référence aux figures 1 à 7, on décrit une installation 10 de fabrication d'un objet manufacturé par fabrication additive par friction-malaxage à partir d'un étiré 1 de matériau de fabrication.

L'installation de fabrication 10 comprend un système de fabrication 24 selon l'invention et un système d'alimentation 12 configuré pour alimenter le système de fabrication 24 en étiré 1 de matériau de fabrication.

Avantageusement, l'installation de fabrication 10 comprend en outre un robot 206 configuré pour manipuler le système de fabrication 24.

Le système d'alimentation 12 est configuré pour entraîner l'étiré 1 en rotation autour de sa fibre neutre.

Avantageusement, le système d'alimentation 12 est en outre configuré pour entraîner l'étiré 1 en translation, notamment suite à une traction exercée par un mécanisme d'avance 44 d'un effecteur 40 du système de fabrication 24.

En particulier, le système d'alimentation 12 est celui décrit dans la demande FR 23 07287, dans laquelle le fil de matériau de fabrication correspond à l'étiré 1 dans la présente demande. Par exemple, l'étiré 1 présente un diamètre compris entre 3 mm et 5 mm.

Le système d'alimentation 12 comprend notamment une bobine 16 d'étiré de matériau de fabrication, un dispositif de déroulement rotatif 14 configuré pour dérouler l'étiré 1 de matériau de fabrication depuis la bobine 16, un dispositif 18 de guidage de l'étiré de matériau de fabrication déroulé depuis le dispositif de déroulement rotatif 14 jusqu'au système de fabrication 24.

En particulier, le dispositif de déroulement rotatif 14 est configuré pour entraîner la bobine 16 en rotation autour d'un axe de rotation principal R1 et pour entraîner l'étiré 1 déroulé en rotation autour de sa fibre neutre.

Le système d'alimentation 12, en particulier le dispositif de déroulement rotatif 14, est notamment configuré pour entraîner la bobine 16 avec une vitesse de rotation supplémentaire correspondant tangentiellement en sortie de bobine 16, à la quantité de matière requise par l'effecteur 40, grâce à un effort de traction exercé sur l'étiré 1 par au moins un organe de préhension décrit plus bas.

Avantageusement, le dispositif 18 de guidage de l'étiré de matériau de fabrication déroulé comprend une gaine de guidage 20 s'étendant depuis une extrémité proximale 20A connectée au dispositif de déroulement rotatif 14 jusqu'à une extrémité distale 20B connectée au système de fabrication 24, comprenant si besoin un redresseur rotatif 25 de l'étiré 1, de façon optionnelle et représenté uniquement sur la figure 1.

Encore avantageusement, la translation générée par le système d'alimentation 12 correspond à la faible rotation supplémentaire de la bobine 16 par rapport à celle de l'effecteur 40, comme expliqué dans la demande FR 23 07287. De manière avantageuse, cette rotation supplémentaire n'entraine pas pour autant un déphasage entre la vitesse de rotation de l'étiré 1 en sortie du système d'alimentation 12 et la vitesse de rotation de l'étiré 1 dans l'effecteur 40.

En particulier, une différence entre la vitesse de rotation de la bobine 16 générée par le système d'alimentation 12 et la vitesse de rotation de l'étiré 1 générée par l'effecteur 40 du système de fabrication 24 est comprise entre 0,5 tr/min et 5 tr/min lorsque l'étiré 1 est malaxé par le système de fabrication 24 (correspondant notamment à une avance de l'étiré 1 avec une vitesse comprise entre 500 mm/min et 5 000 mm/min) et avantageusement sensiblement égale à 0 tr/min lorsque l'étiré 1 est fourni au système de fabrication 24 sans que l'étiré 1 ne soit malaxé.

En référence aux figures 1 à 6, on décrit un premier mode de réalisation d'un système de fabrication 24.

Le système 24 est un système de fabrication de l'objet manufacturé par fabrication additive par friction-malaxage à partir de l'étiré 1.

Le système de fabrication 24 comprend un dispositif de malaxage 26 et un effecteur 40.

Avantageusement, le système de fabrication 24 comprend en outre un dispositif de lubrification 158.

Encore avantageusement, le système de fabrication 24 comprend en outre un dispositif de soufflage de gaz inerte 166.

Encore avantageusement, le système de fabrication 24 comprend en outre un dispositif 172 de refroidissement du dispositif de malaxage 26.

Encore avantageusement, le système de fabrication 24 comprend en outre un dispositif de refroidissement 184 d'un dispositif d'actionnement 124, notamment d'un mécanisme d'actionnement 126 du dispositif d'actionnement 124, de l'effecteur 40.

Encore avantageusement, le système de fabrication 24 comprend un dispositif 192 de guidage de l'effecteur 40 et du dispositif de malaxage 26.

Le dispositif de malaxage 26 comprend un pion de malaxage 28 destiné à malaxer l'étiré 1 pour fabriquer l'objet manufacturé.

Le dispositif de malaxage 26 est notamment monté sur une extrémité distale de l'effecteur 40.

Avantageusement, le pion de malaxage 28 est configuré pour être entraîné en rotation par l'effecteur 40 autour de l'axe longitudinal A-A' de l'effecteur 40 et est destiné à malaxer l'étiré 1 de matériau de fabrication pour fabriquer l'objet manufacturé. En particulier, le malaxage de l'étiré 1 de matériau de fabrication déroulé permet de rendre malléable le matériau de fabrication afin d'ajouter cette matière malléable sur un substrat afin de fabriquer progressivement l'objet manufacturé.

Avantageusement, le pion de malaxage 28 est entraîné en rotation autour de l'axe longitudinal A-A' par la rotation d'au moins une tige 136 du mécanisme d'actionnement 126, qui sera décrit plus bas.

Encore avantageusement, le pion de malaxage 28 présente un diamètre, mesuré selon une direction sensiblement perpendiculaire à l'axe longitudinale A-A', entre 15 mm et 30 mm.

Par exemple, le dispositif de malaxage 26 comprend un support 30 sur lequel est monté le pion de malaxage 28.

Avantageusement, le support 30 comprend un corps de forme générale sensiblement cylindrique d'axe longitudinal A-A'. Le support 30 est notamment monté sur l'effecteur 40.

Le support 30 comprend notamment une cavité 32 de réception du pion de malaxage 28, la cavité 32 s'étendant selon l'axe longitudinal A-A' depuis une face distale 30A du support 30.

Notamment, le support 30 est configuré pour être entraîné en rotation par l'effecteur 40, en particulier par le mécanisme d'actionnement 126, autour de l'axe longitudinal A-A' de l'effecteur 40. La rotation du support 30 entraîne la rotation du pion de malaxage 28 autour de l'axe longitudinal A-A'.

Le support 30 du dispositif de malaxage 26 comprend notamment un passage axial 34 s'étendant sensiblement selon l'axe longitudinal A-A' et à travers lequel l'étiré 1 est destiné à circuler vers le pion de malaxage 28.

Le support 30 comprend en outre, par exemple, une cavité 36 de réception de l'au moins une tige 136 du mécanisme d'actionnement 126 de l'effecteur 40, qui sera décrit plus bas.

L'effecteur 40 est configuré pour entraîner en rotation le pion de malaxage 28 et pour alimenter le pion de malaxage 28 en étiré 1 par translation de l'étiré 1 selon l'axe longitudinal A-A' dans une direction d'alimentation DA.

En particulier, l'effecteur 40 est en outre configuré pour entraîner en rotation l'étiré 1 autour de l'axe longitudinal A-A', qui est notamment sensiblement confondu avec la fibre neutre de l'étiré 1 s'étendant dans l'effecteur 40.

Notamment, l'effecteur 40 délimite un chemin 42 d'acheminement de l'étiré 1 dans lequel l'étiré 1 est destiné à être véhiculé en direction du dispositif de malaxage 26.

Avantageusement, le chemin d'acheminement 42 de l'effecteur 40 s'étend selon l'axe longitudinal A-A'.

Le chemin d'acheminement 42 de l'effecteur 40 est en particulier délimité par une pluralité d'éléments de l'effecteur 40 décrits plus bas, notamment des passages 132, 50, 88.

Le chemin d'acheminement 42 de l'effecteur 40 s'étend notamment depuis une entrée axiale 42A à laquelle est fourni l'étiré 1 par le système d'alimentation 12 et une sortie axiale 42B en regard du dispositif de malaxage 26, notamment en regard du passage axial 34 du support 30 du dispositif de malaxage 26, depuis laquelle l'étiré 1 est fourni au dispositif de malaxage 26, en particulier au pion de malaxage 28, pour être malaxé.

L'effecteur 40 comprend le dispositif d'actionnement 124 configuré pour entraîner le mécanisme d'avance 44 et le dispositif de malaxage 26 en rotation autour de l'axe longitudinal A-A'.

Encore avantageusement, l'effecteur 40 comprend un carter externe 140, un premier palier 146 et un deuxième palier 152.

Encore avantageusement, l'effecteur 40 comprend au moins un capteur d'effort 156.

Le dispositif d'actionnement 124 comprend le mécanisme 44 d'avance de l'étiré 1.

Avantageusement, le dispositif d'actionnement 124 comprend en outre le mécanisme d'actionnement 126.

Le mécanisme d'avance 44 comprend un premier dispositif de préhension 60 et un deuxième dispositif de préhension 100.

Avantageusement, dans le premier mode de réalisation, le mécanisme d'avance 44 comprend au moins une roue dentée 120. En particulier, le mécanisme d'avance 44 comprend autant de roues dentées 120 que de premières crémaillères 78 ou que de deuxièmes crémaillères 112 décrites plus bas.

Encore avantageusement, le mécanisme d'avance 44 comprend un support 46.

Le mécanisme d'avance 44 est configurable dans :
a) une première configuration dans laquelle au moins un premier organe de préhension 80 du premier dispositif de préhension 60 saisit l'étiré 1 et le déplace dans la direction d'alimentation DA pendant qu'au moins un deuxième organe de préhension 116 du deuxième dispositif de préhension 100 lâche l'étiré et se déplace dans une direction DB opposée à la direction d'alimentation DA ;
b) une deuxième configuration dans laquelle l'au moins un deuxième organe de préhension 116 saisit l'étiré 1 et le déplace dans la direction d'alimentation DA pendant que l'au moins un premier organe de préhension 80 lâche l'étiré 1 et se déplace dans la direction DB opposée à la direction d'alimentation DA.

Le mécanisme d'avance 44 est destiné à alterner entre la première configuration et la deuxième configuration pour déplacer l'étiré 1 en translation selon l'axe longitudinal A-A' dans la direction d'alimentation DA. Notamment, lorsque l'au moins un premier organe de préhension 80 saisit l'étiré 1, l'au moins un deuxième organe de préhension 116 lâche l'étiré 1 simultanément et lorsque l'au moins un premier organe de préhension 80 lâche l'étiré 1, l'au moins un deuxième organe de préhension 116 saisit l'étiré 1 simultanément. L'alternance quasi instantanée entre la première configuration et la deuxième configuration permet de déplacer l'étiré 1 en translation pratiquement sans interruption. Notamment, par « sans interruption », on entend que l'étiré 1 est déplacé en translation sans que la vitesse de translation correspondante ne soit sensiblement nulle plus de 0,1 s.

Par exemple, le mécanisme d'avance 44 est configuré pour déplacer l'étiré 1 en translation selon l'axe longitudinal A-A' dans la direction d'alimentation DA à une vitesse comprise entre 500 mm/min et 5 000 mm/min

Avantageusement, le mécanisme d'avance 44 est en outre destiné à être entraîné en rotation autour de l'axe longitudinal A-A' par la rotation de l'au moins une tige 136 du mécanisme d'actionnement 126 autour de l'axe longitudinal A-A', notamment à une vitesse de rotation comprise entre 100 et 5 000 tr/min.

Le support 46 du mécanisme d'avance 44 est fixe en translation selon l'axe longitudinal A-A' et notamment mobile en rotation autour de l'axe longitudinal A-A'.

Le support 46 comprend une base 48 s'étendant sensiblement perpendiculairement à l'axe longitudinal A-A' et une jupe 56 s'étendant sensiblement selon l'axe longitudinal A-A' depuis la base 48.

La base 48 du support 46 du mécanisme d'avance 44 s'étend entre des brides 102, 110 du deuxième dispositif de préhension 100, qui sera décrit plus bas.

Avantageusement, la base 48 délimite un passage axial 50 s'étendant selon l'axe longitudinal A-A' et à travers lequel l'étiré 1 est destiné à s'étendre. Le passage axial 50 de la base 48 délimite au moins en partie le chemin d'acheminement 42 de l'effecteur 40.

Encore avantageusement, la base 48 délimite au moins un orifice traversant 52 à travers lequel s'étend une crémaillère 112 du deuxième dispositif de préhension 100.

Encore avantageusement, la base 48 délimite au moins une cavité 54 de réception de l'au moins une tige 136 du mécanisme d'actionnement 126.

La jupe 56 du support 46 s'étend radialement entre le premier dispositif de préhension 60 et le deuxième dispositif de préhension 100.

La jupe 56 comprend notamment des encoches axiales 58 s'étendant longitudinalement depuis un bord distal 56A de la jupe 56. Les encoches axiales 58 reçoivent les roues dentées 120.

La jupe 56 est notamment fixe en translation selon l'axe longitudinal A-A'.

Le premier dispositif de préhension 60 comprend l'au moins un premier organe de préhension 80. Dans l'exemple des figures, le premier dispositif de préhension 60 comprend un seul premier organe de préhension 80. En variante non-illustré, le premier dispositif de préhension 60 comprend une pluralité de premiers organes de préhension 80.

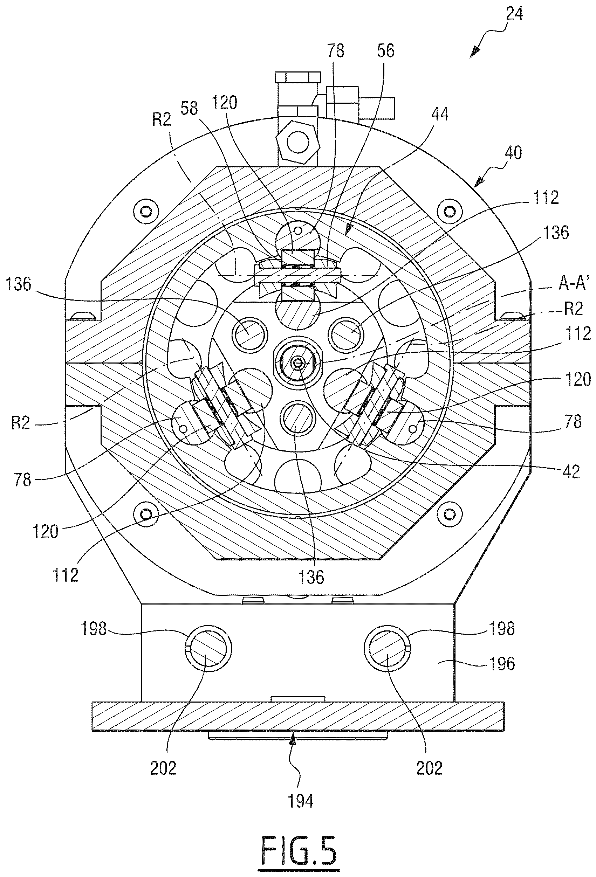

Avantageusement, le premier dispositif de préhension 60 comprend en outre une première bride distale 62 et au moins une première crémaillère 78. Par exemple, comme illustré sur la figure 5, le premier dispositif de préhension 60 comprend une pluralité de premières crémaillères 78 réparties angulairement autour de l'axe longitudinal A-A', notamment au moins deux premières crémaillères 78, en particulier au moins trois premières crémaillères 78 comme cela est illustré sur les figures.

Encore avantageusement, le premier dispositif de préhension 60 comprend en outre une première bride proximale 70.

Par exemple, la première bride distale 62 s'étend dans un plan sensiblement perpendiculaire à l'axe longitudinal A-A'.

Avantageusement, la première bride distale 62 comprend un orifice axial 64 dans lequel est monté l'au moins un premier organe de préhension 80.

Encore avantageusement, la première bride distale 62 comprend au moins une cavité 66 de réception de l'au moins une première crémaillère 78.

Encore avantageusement, la première bride distale 62 comprend au moins un orifice traversant 68 à travers lequel l'au moins une tige 136 du mécanisme d'actionnement 126 de l'effecteur 40 s'étend.

Par exemple, la première bride proximale 70 s'étend dans un plan sensiblement perpendiculaire à l'axe longitudinal A-A', en particulier sensiblement parallèlement à la première bride distale 62.

Avantageusement, la première bride proximale 70 comprend un corps annulaire 72 délimitant un passage axial 74 à travers lequel s'étend le deuxième dispositif de préhension 100, et notamment également l'au moins une tige 136 du mécanisme d'actionnement 126 de l'effecteur 40.

Encore avantageusement, la première bride proximale 70 comprend en outre au moins une cavité 76 de réception de l'au moins une première crémaillère 78.

La première bride proximale 70 permet de solidariser la pluralité de crémaillères 78 réparties angulairement.

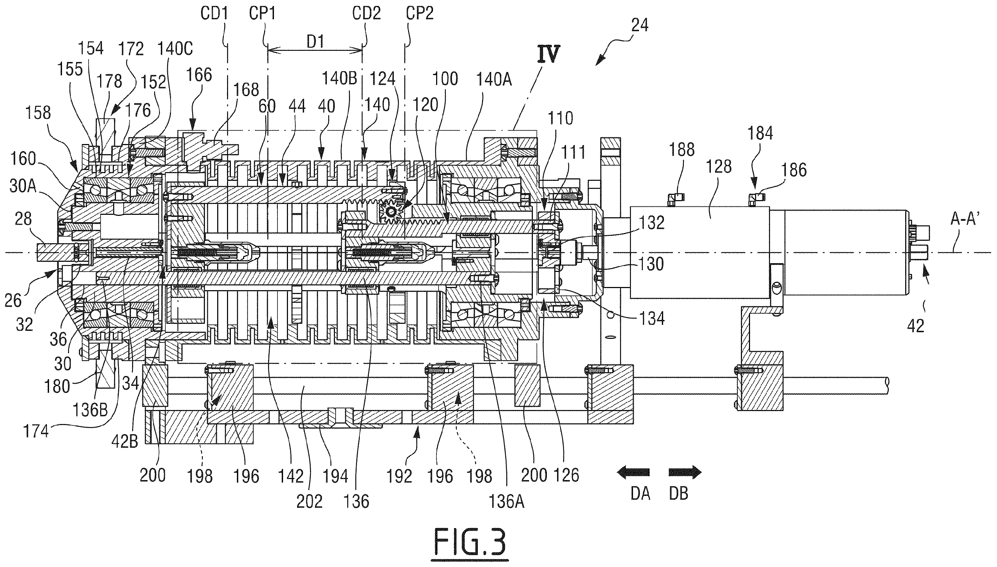

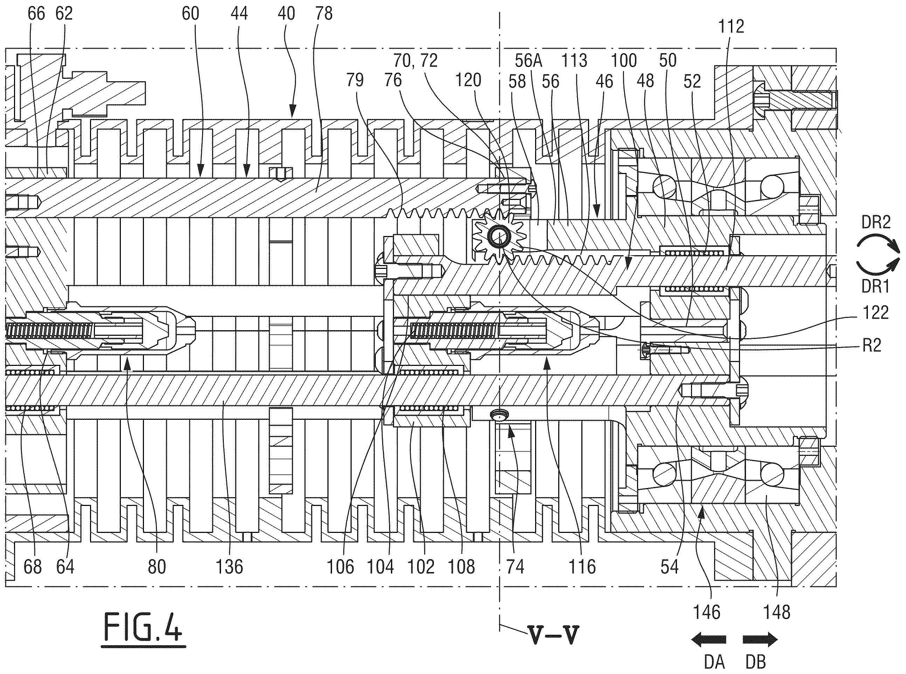

En référence aux figures 3 et 4, l'au moins une première crémaillère 78 est montée sur la première bride distale 62, notamment dans la cavité de réception 66, et s'étend sensiblement parallèlement à l'axe longitudinal A-A'.

En particulier, l'au moins une première crémaillère 78 est en outre montée sur la première bride proximale 70, notamment dans la cavité de réception 76.

L'au moins un premier organe de préhension 80 s'étend le long de l'axe longitudinal A-A'. Dans le cas où le premier dispositif de préhension 60 comprend une pluralité de premiers organes de préhension 80, les premiers organes de préhension 80 sont alignés le long de l'axe longitudinal A-A'.

Avantageusement, l'au moins un premier organe de préhension 80 est déplaçable entre une première coordonnée proximale CP1 et une première coordonnée distale CD1 selon l'axe longitudinal A-A'.

Encore avantageusement, l'au moins un premier organe de préhension 80 est monté sur la première bride distale 62.

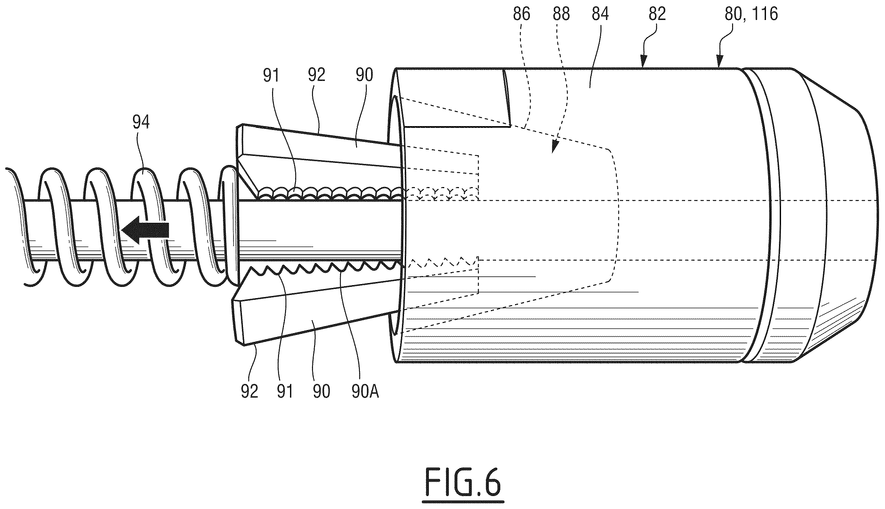

Par exemple, en référence à la figure 6, l'au moins un premier organe de préhension 80 est une première pince configurable entre :
- une configuration de serrage, dans laquelle la première pince sert l'étiré ; et
- une configuration de libération, dans laquelle la première pince libère l'étiré.

Notamment, la première pince est dans :
- la configuration de serrage lorsque le premier organe de préhension 80 correspondant est déplacé dans la direction d'alimentation DA ; et
- la configuration de libération lorsque le premier organe de préhension 80 correspondant est déplacé dans la direction DB.

Avantageusement, en référence à la figure 6, la première pince comprend une base 82, au moins deux éléments de serrage 90 et un élément de contrainte 94.

La base 82 comporte une jupe cylindrique 84 externe.

La jupe cylindrique 84 comprend une surface interne conique 86 définissant un passage conique 88 s'étendant sensiblement selon l'axe longitudinal A-A' et à travers lequel l'étiré 1 est destiné à s'étendre.

Les au moins deux éléments de serrage 90 sont destinés à s'étendre au moins en partie dans le passage conique 88 entre la surface interne conique 86 de la jupe cylindrique 84 et l'étiré 1.

Chaque élément de serrage 90 comprend une surface externe conique 92 sensiblement complémentaire de la surface interne conique 86 de la jupe cylindrique 84.

L'élément de contrainte 94 est apte à contraindre les au moins deux éléments de serrage 90 contre la jupe cylindrique 84. L'élément de contrainte 94 est par exemple un ressort destiné à s'étendre autour de l'étiré 1 parallèlement à l'axe longitudinal A-A'. Le ressort est notamment d'une part en appui axial sur les éléments de serrage 90 et d'autre part en appui sur la bride sur laquelle est montée l'organe de préhension.

En particulier, lorsque l'élément de contrainte 84 contraint les au moins deux éléments de serrage 90 contre la jupe cylindrique 84, la surface externe conique 92 des éléments de serrage 90 subit une contrainte radiale dirigée sensiblement vers l'axe longitudinal A-A' par coopération de la surface externe conique 92 avec la surface interne conique 86 de la jupe cylindrique 84.

La première pince est telle que :
- dans la configuration de serrage, l'élément de contrainte 94 contraint les au moins deux éléments de serrage 90 contre la jupe cylindrique 84 de sorte que chaque élément de serrage 90 est contraint contre l'étiré 1 pour serrer l'étiré 1 ;
- dans la configuration de libération, l'élément de contrainte 94 réduit sa contrainte sur les au moins deux éléments de serrage 90 de sorte que chaque élément de serrage 90 relâche l'étiré 1.

Avantageusement, dans la première configuration du mécanisme d'avance 44, l'au moins un premier organe de préhension 80 est destiné à entraîner en rotation l'étiré 1 autour de sa fibre neutre. En particulier, la rotation de l'au moins un premier organe de préhension 80 autour de l'axe longitudinal A-A' et la saisie de l'étiré 1 par l'au moins un premier organe de préhension 80 entraîne l'étiré 1 en rotation autour de sa fibre neutre, qui est notamment destinée à être sensiblement confondue avec l'axe longitudinal A-A'.

Encore avantageusement, dans la deuxième configuration du mécanisme d'avance 44, l'au moins un deuxième organe de préhension 116 est destiné à entraîner en rotation l'étiré 1 autour de sa fibre neutre. En particulier, la rotation de l'au moins un deuxième organe de préhension 116 autour de l'axe longitudinal A-A' et la saisie de l'étiré 1 par l'au moins un deuxième organe de préhension 116 entraîne l'étiré 1 en rotation autour de sa fibre neutre.

Par exemple, le mécanisme d'avance 44 est configuré de sorte que chaque première pince soit dans la configuration de serrage lorsque l'au moins un premier organe de préhension 80 est déplacé dans la direction d'alimentation DA et de sorte que chaque première pince soit dans la configuration de libération lorsque l'au moins un premier organe de préhension 80 est déplacé dans la direction DB.

Le deuxième dispositif de préhension 100 comprend l'au moins un deuxième organe de préhension 116. Dans l'exemple des figures, le deuxième dispositif de préhension 100 comprend un seul deuxième organe de préhension 116. En variante non-illustré, le deuxième dispositif de préhension 100 comprend une pluralité de deuxièmes organes de préhension 116.

Avantageusement, en référence aux figures 3 à 5, le deuxième dispositif de préhension 100 comprend en outre une deuxième bride distale 102 et au moins une deuxième crémaillère 112. Par exemple, en référence à la figure 5, le deuxième dispositif de préhension 100 comprend une pluralité de deuxièmes crémaillères 112 réparties angulairement autour de l'axe longitudinal A-A', notamment au moins deux deuxièmes crémaillères 112, en particulier au moins trois deuxièmes crémaillères comme cela est illustré sur l'exemple des figures. En particulier, le deuxième dispositif de préhension 100 et le premier dispositif de préhension 60 comprennent chacun le même nombre de crémaillères 112, 78.

Encore avantageusement, le deuxième dispositif de préhension 100 comprend en outre une deuxième bride proximale 110.

Par exemple, la deuxième bride distale 102 s'étend dans un plan sensiblement perpendiculaire à l'axe longitudinal A-A'.

Avantageusement, la deuxième bride distale 102 comprend un orifice axial 104 dans lequel est monté le deuxième organe de préhension 116.

Encore avantageusement, la deuxième bride distale 102 comprend au moins une cavité 106 de réception de l'au moins une deuxième crémaillère 112.

Encore avantageusement, la deuxième bride distale 102 comprend au moins un orifice traversant 108 à travers lequel l'au moins une tige 136 du mécanisme d'actionnement 126 de l'effecteur 40 s'étend.

Par exemple, la deuxième bride proximale 110 s'étend dans un plan sensiblement perpendiculaire à l'axe longitudinal A-A', en particulier sensiblement parallèlement à la deuxième bride distale 102.

L'au moins une deuxième crémaillère 112 est montée sur la deuxième bride distale 102, notamment dans la cavité de réception 106, et s'étend sensiblement parallèlement à l'axe longitudinal A-A'.

En particulier, l'au moins une deuxième crémaillère 112 est en outre montée sur la deuxième bride proximale 110, notamment dans une cavité de réception 111 de la deuxième bride proximale 110.

Avantageusement, en référence à la figure 4, l'au moins une deuxième crémaillère 112 s'étend au moins en partie en regard de l'au moins une première crémaillère 78, notamment de sorte que des dents 113 de l'au moins une deuxième crémaillère 112 font face à des dents 79 de l'au moins une première crémaillère 78. Encore avantageusement, toujours en référence à la figure 4, l'au moins une roue dentée 120 s'étend entre l'au moins une deuxième crémaillère 112 et l'au moins une première crémaillère 78.

L'au moins un deuxième organe de préhension 116 s'étend le long de l'axe longitudinal A-A'. Dans le cas où le deuxième dispositif de préhension 100 comprend une pluralité de deuxièmes organes de préhension 116, les deuxièmes organes de préhension 116 sont alignés le long de l'axe longitudinal A-A'.

Avantageusement, l'au moins un deuxième organe de préhension 116 est déplaçable entre une deuxième coordonnée proximale CP2 et une deuxième coordonnée distale CD2 selon l'axe longitudinal A-A'.

En particulier, l'au moins un deuxième organe de préhension 116 et l'au moins un premier organe de préhension 80 sont destinés à se déplacer de façon symétrique par rapport à un plan sensiblement perpendiculaire à l'axe longitudinal A-A', ledit plan s'étendant notamment entre la deuxième coordonnée distale CD2 et la première coordonnée proximale CP1.

Encore avantageusement, l'au moins un deuxième organe de préhension 116 est monté sur la deuxième bride distale 102.

Par exemple, la première coordonnée proximale CP1 est située en aval de la deuxième coordonnée distale CD2 selon la direction d'alimentation DA. Ainsi, la course de l'au moins un premier organe de préhension 80 est située en aval de la course de l'au moins un deuxième organe de préhension 116.

Avantageusement, la distance D1 entre la première coordonnée proximale CP1 et la deuxième coordonnée distale CD2, mesurée le long de l'axe longitudinal A-A' est comprise entre 10 mm et 150 mm. Lorsque le premier dispositif de préhension 60 comporte une pluralité de premiers organes de préhension 80 et lorsque le deuxième dispositif de préhension 100 comporte une pluralité de deuxièmes organes de préhension 116, la distance D1 est mesurée entre les premier et deuxième organes de préhension 80, 116 les plus proches l'un de l'autre. Ceci permet d'éviter les risques de flambage de l'étiré 1 lorsque l'écartement entre les organes de préhension est maximal et que celui-ci se réduit symétriquement.

Par exemple, l'au moins un deuxième organe de préhension 116 est une deuxième pince configurable entre :
- une configuration de serrage, dans laquelle la deuxième pince sert l'étiré ; et
- une configuration de libération, dans laquelle la deuxième pince libère l'étiré. Notamment, la deuxième pince est dans :
- la configuration de serrage lorsque l'au moins un deuxième organe de préhension 116 est déplacé dans la direction d'alimentation DA ; et
- la configuration de libération lorsque l'au moins un deuxième organe de préhension 116 est déplacé dans la direction DB.

Avantageusement, en référence à la figure 6, la deuxième pince est structurellement identique à la première pince.

La deuxième pince est telle que :
- dans la configuration de serrage, l'élément de contrainte 94 contraint les au moins deux éléments de serrage 90 contre la jupe cylindrique 84 de sorte que chaque élément de serrage 90 est contraint contre l'étiré 1 pour serrer l'étiré 1 ;
- dans la configuration de libération, l'élément de contrainte 94 réduit sa contrainte sur les au moins deux éléments de serrage 90 de sorte que chaque élément de serrage 90 relâche l'étiré 1.

Avantageusement, les éléments de serrage 90 des pinces des au moins un premier et au moins un deuxième organes de préhension 80, 116 comprennent une surface interne 90A en regard de l'axe A-A' et donc destinée à être en regard de l'étiré 1.

La surface interne 90A des éléments de serrage 90 est en outre destinée à coopérer avec l'étiré 1 dans la configuration de serrage, notamment à accrocher l'étiré 1 dans la configuration de serrage.

Notamment, la surface interne 90A des éléments de serrage 90 comprend des dents 91 aptes à accrocher l'étiré 1. Ainsi, chaque organe de préhension 80, 116 accroche efficacement l'étiré 1 pour le déplacer selon l'axe longitudinal A-A' et pour l'entraîner en rotation par l'action du mécanisme d'actionnement 126, comme il sera présenté plus en détails ci-dessous.

Avantageusement, pour chaque pince, la force de serrage de l'étiré 1 générée par les éléments de serrage 90 est telle qu'en cas de différence substantielle entre la vitesse de rotation engendrée par le mécanisme d'actionnement 126 et la vitesse de rotation de l'étiré 1 générée par le système d'alimentation 12, l'étiré 1 est libéré en rotation autour de sa fibre neutre. Les éventuelles stries marquées par les dents 91 des éléments de serrage 90 n'empêche pas la progression de l'étiré 1 dans la direction d'alimentation DA. Au contraire, lorsque les dents 91 pénètrent dans les stries, cela améliore l'accroche de l'étiré 1 par les éléments de serrage 90.

Encore avantageusement, les dents 91 sont configurées de sorte qu'elles accrochent l'étiré 1 lorsque les dents 91 se déplacent selon la direction d'alimentation DA par rapport à l'étiré 1 et de sorte qu'elles libèrent l'étiré 1 lorsque les dents 91 se déplacent selon la direction opposée DB. Avantageusement, les pinces sont configurées de sorte à autoriser une évacuation de rebuts (par exemple des copeaux de matériau de fabrication) générés par l'action des dents 91 sur l'étiré 1.

Encore avantageusement, en cas de différence entre la vitesse de rotation engendrée par le mécanisme d'actionnement 126 et la vitesse de rotation de l'étiré 1 générée par le système d'alimentation 12, les organes de préhension 80, 116, en particulier les éléments de serrage 90 correspondant engendre une torsion sur l'étiré 1, ladite torsion entraînant un redressage de l'étiré 1, qui pour rappel est notamment initialement stockée sous la forme d'une bobine 16 d'où l'étiré 1 sort avec une courbure plus ou moins prononcée .

Encore avantageusement, en référence à la figure 6, les éléments de serrage 90 des pinces des premier et deuxième organes de préhension 80, 116 sont répartis angulairement autour de l'axe longitudinal A-A'.

Par exemple, le mécanisme d'avance 44 est configuré de sorte que chaque deuxième pince soit dans la configuration de serrage lorsque l'au moins un deuxième organe de préhension 116 est déplacé dans la direction d'alimentation DA et de sorte que chaque deuxième pince soit dans la configuration de libération lorsque l'au moins un deuxième organe de préhension 116 est déplacé dans la direction DB.

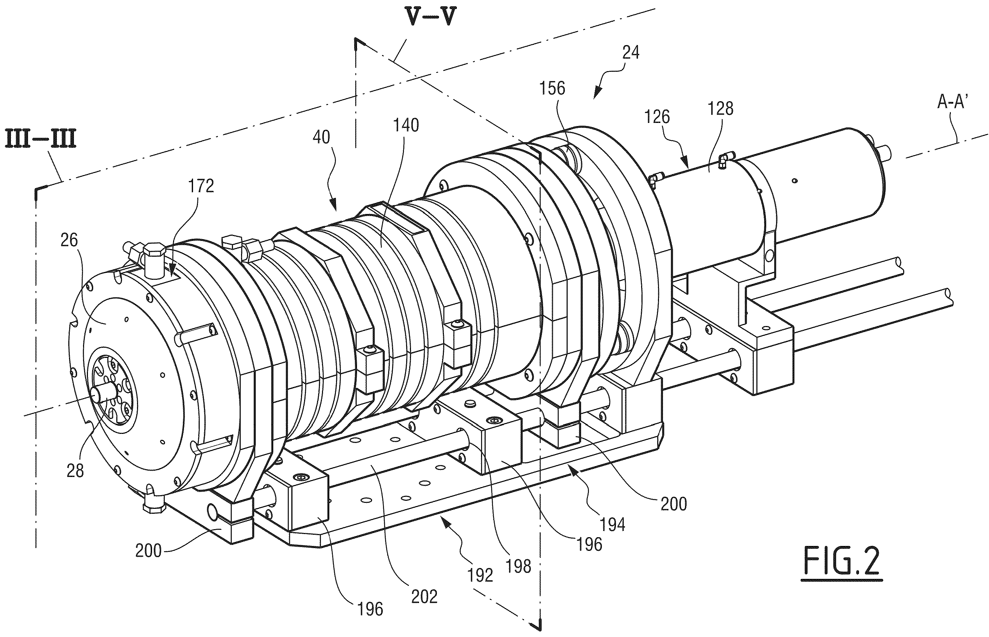

En référence aux figures 2 à 5, chaque roue dentée 120 est montée sur la jupe 56 du support 46 du mécanisme d'avance 44. En particulier, chaque roue dentée 120 est montée dans une encoche axiale 58 de la jupe 56 (visible sur la figure 4).

Notamment, chaque roue dentée 120 est fixe en translation selon l'axe longitudinal A-A'.

Chaque roue dentée 120 comprend des dents 122 destinées à coopérer avec des dents 79 de la première crémaillère 78 correspondante et des dents 113 de la deuxième crémaillère 112 correspondante. En particulier, les dents 122 de chaque roue dentée 120 sont engagés avec les dents 79 de la première crémaillère 78 correspondante et les dents 113 de la deuxième crémaillère 112 correspondante.

Chaque roue dentée 120 est mobile en rotation selon un axe R2 sensiblement perpendiculaire à un plan comprenant l'axe longitudinal A-A' dans un premier sens de rotation DR1 et dans un deuxième sens de rotation DR2 opposé au premier sens de rotation DR1 (voir la figure 4).

Le mécanisme d'actionnement 126 est configurable entre
- une première configuration dans laquelle le mécanisme d'actionnement 126 déplace l'au moins une deuxième crémaillère 112 en translation dans la direction DB opposée à la direction d'alimentation DA pour déplacer simultanément :
   - le deuxième dispositif de préhension 100 dans la direction DB opposée à la direction d'alimentation DA ;
   - le premier dispositif de préhension 60 dans la direction d'alimentation DA, par coopération de l'au moins une deuxième crémaillère 112 avec l'au moins une première crémaillère 78 par l'intermédiaire de l'au moins une roue dentée 120 ;
- une deuxième configuration dans laquelle le mécanisme d'actionnement 126 déplace l'au moins une deuxième crémaillère 112 en translation dans la direction d'alimentation DA pour déplacer simultanément :
   - le deuxième dispositif de préhension 100 dans la direction d'alimentation DA ;
   - le premier dispositif de préhension 60 dans la direction DB opposée à la direction d'alimentation DA, par coopération avec l'au moins une première crémaillère 78 par l'intermédiaire de l'au moins une roue dentée 120.

En particulier :
- dans la première configuration du mécanisme d'actionnement 126, l'au moins une deuxième crémaillère 112 est translatée dans la direction DB opposée à la direction d'alimentation DA, ce qui entraîne l'au moins une roue dentée 120 en rotation dans le premier sens de rotation DR1, ce qui entraîne la translation de l'au moins une première crémaillère 78 dans la direction d'alimentation DA.
- dans la deuxième configuration du mécanisme d'actionnement 126, l'au moins une deuxième crémaillère 112 est translatée dans la direction d'alimentation DA, ce qui entraîne l'au moins une roue dentée 120 en rotation dans le deuxième sens de rotation DR2, ce qui entraîne la translation de l'au moins une première crémaillère 78 dans la direction DB.

Le mécanisme d'avance 44 est :
- dans sa première configuration lorsque le mécanisme d'actionnement 126 est dans sa première configuration ;
- dans sa deuxième configuration lorsque le mécanisme d'actionnement 126 est dans sa deuxième configuration.

Le mécanisme d'actionnement 126 étant configuré pour alterner entre sa première et sa deuxième configuration pour déplacer l'étiré de matériau de fabrication 1 en translation selon l'axe longitudinal A-A' dans la direction d'alimentation DA.

Le mécanisme d'actionnement 126 est en outre configuré pour entraîner le mécanisme d'avance 44 et le pion de malaxage 28 en rotation autour de l'axe longitudinal A-A'.

En particulier, le mécanisme d'actionnement 126 est configuré pour entraîner les premier et deuxième dispositifs de préhension 60, 100, notamment les premier et deuxième organes de préhension 80, 116 en rotation autour de l'axe longitudinal A-A'. Le mécanisme d'actionnement 126 est en outre configuré pour entraîner le support 46 du mécanisme d'avance 44 sur lequel est montée l'au moins une roue dentée 120 et l'au moins une deuxième crémaillère 112 en rotation autour de l'axe longitudinal A-A'.

Le mécanisme d'actionnement 126 comprend un actionneur 128, un arbre 130, un flasque 134 et au moins une tige 136. Par exemple, en référence à la figure 5, le mécanisme d'actionnement 126 comprend une pluralité de tiges 136 réparties angulairement autour de l'axe longitudinal A-A', par exemple au moins deux tiges 136, notamment au moins trois tiges 136 comme cela est illustré sur l'exemple des figures.

Avantageusement, l'installation 10 comprend en outre un dispositif de synchronisation (non-illustré) configuré pour adapter la vitesse de rotation de l'étiré 1 générée par le système d'alimentation 12 de façon à être en phase avec la vitesse de rotation engendrée par le mécanisme d'actionnement 126, en particulier de sorte que la différence entre la vitesse de rotation engendrée par le mécanisme d'actionnement 126 et la vitesse de rotation de la bobine 16 engendrée par le système d'alimentation 12 ne provienne que de la consommation en étiré 1 au niveau de la bobine 16. En outre, le dispositif de synchronisation est configuré pour adapter la fréquence d'alternance entre la première et la deuxième configuration du mécanisme d'actionnement 126. Notamment, le dispositif de synchronisation est configuré pour contrôler l'actionneur 128 afin de modifier la vitesse et le sens de translation de l'au moins une deuxième crémaillère 112 selon l'axe longitudinal A-A', afin en particulier d'adapter la quantité de matériau de fabrication fournie au pion de malaxage 28. La course de translation est quant à elle réglée initialement pour correspondre au mieux aux capacités de résistance au flambage de l'étiré 1 et aux longueurs dentées des crémaillères.

L'actionneur 128 comprend par exemple un premier moteur configuré pour entraîner l'arbre 130 en rotation autour de l'axe longitudinal A-A' et un deuxième moteur configuré pour entraîner l'arbre 130 en translation selon l'axe longitudinal A-A'. En variante, l'actionneur 128 comprend un unique moteur configuré pour entraîner l'arbre 130 en rotation autour de l'axe longitudinal A-A', ledit moteur étant monté sur un vérin configuré pour entraîner ledit moteur et l'arbre 130 en translation selon l'axe longitudinal A-A'.

L'arbre 130 s'étend sensiblement selon l'axe longitudinal A-A' et est apte à être entraîné en rotation autour de l'axe longitudinal A-A' et en translation selon l'axe longitudinal A-A' par l'actionneur 128.

L'arbre 130 comprend un passage tubulaire 132 s'étendant sensiblement selon l'axe longitudinal A-A' et à travers lequel l'étiré 1 est destiné à s'étendre. Le passage tubulaire 132 de l'arbre 130 forme au moins en partie le chemin d'acheminement 42 de l'effecteur 40.

Le flasque 134 est monté sur l'arbre 130 et s'étend sensiblement perpendiculairement à l'axe longitudinal A-A'.

Le flasque 134 est notamment entraîné en rotation par l'arbre 130.

En référence à la figure 3, le flasque 134 est notamment confondu avec la deuxième bride proximale 110 du deuxième dispositif de préhension 100.

Avantageusement, l'au moins une deuxième crémaillère 112 est montée sur le flasque 134, le mécanisme d'actionnement 126 étant tel que :
- dans la première configuration du mécanisme d'actionnement 126, l'actionneur 128 entraîne l'au moins une deuxième crémaillère 112 en translation dans la direction DB opposée à la direction d'alimentation DA en déplaçant l'arbre 130 et le flasque 134 en translation dans la direction DB opposée à la direction d'alimentation DA ;
- dans la deuxième configuration du mécanisme d'actionnement 126, l'actionneur 128 entraîne l'au moins une deuxième crémaillère 112 en translation dans la direction d'alimentation DA en déplaçant l'arbre 130 et le flasque 134 en translation dans la direction d'alimentation DA.

L'au moins une tige 136 est solidaire en rotation du flasque 134, notamment par l'intermédiaire du support 46. Selon une variante non-illustrée, l'au moins une tige 136 est montée sur le flasque 134.

L'au moins une tige 136 s'étend sensiblement parallèlement à l'axe longitudinal A-A' à travers le premier dispositif de préhension 60, à travers le deuxième dispositif de préhension 100 et au moins en partie à travers le dispositif de malaxage 26.

En particulier, l'au moins une tige 136 :
- est reçue dans la cavité de réception 36 du support 30 du dispositif de malaxage 26 ;
- s'étend à travers l'au moins un orifice traversant 68 de la première bride distale 62 du premier dispositif de préhension 60 ;
- s'étend à travers l'au moins un orifice traversant 108 de la deuxième bride distale 102 du deuxième dispositif de préhension 100 ; et
- est reçue dans la cavité de réception 54 du support 46 du mécanisme d'avance 44.

Notamment, une extrémité distale 136B de l'au moins une tige 136 est reçue dans la cavité de réception 36 du support 30 du dispositif de malaxage 26 et une extrémité proximale 136A de l'au moins une tige 136, opposée à l'extrémité distale 136B, est reçue dans la cavité de réception 54 du support 46 du mécanisme d'avance 44.

L'au moins une tige 136 est entraînée en rotation autour de l'axe longitudinale A-A'.

En particulier, le mécanisme d'avance 44 est entraîné en rotation autour de l'axe longitudinal A-A' par la rotation de l'au moins une tige 136 autour de l'axe longitudinal A-A'.

Le carter externe 140 délimite un espace interne 142 dans lequel s'étend le mécanisme d'avance 44, et avantageusement en outre le dispositif de malaxage 26.

En particulier, le carter externe 140 comprend une portion distale 140C, une portion proximale 140A et une portion intermédiaire 140B s'étendant entre la portion distale 140C et la portion proximale 140A.

La portion distale 140C du carter externe 140 s'étend autour du dispositif de malaxage 26.

La portion intermédiaire 140B du carter externe 140 s'étend autour du mécanisme d'avance 44, notamment autour des premier et deuxième dispositifs de préhension 60, 100.

La portion proximale 140A du carter externe 140 s'étend autour du support 46 du mécanisme d'avance 44.

Le palier 146 s'étend entre le mécanisme d'avance 44 et le carter externe 140 et est configuré pour guider le mécanisme d'avance 44 en rotation autour de l'axe longitudinal A-A' par rapport au carter externe 140.

En particulier, le palier 146 s'étend entre le support 46 du mécanisme d'avance 44 et le carter externe 140, notamment la portion proximale 140A du carter externe 140.

Le palier 146 comprend notamment au moins un roulement 148, en particulier à bille ou à rouleaux.

Le palier 152 s'étend entre le dispositif de malaxage 26 et le carter externe 140 et est configuré pour guider le dispositif de malaxage 26 en rotation autour de l'axe A-A' par rapport au carter externe 140.

En particulier, le palier 152 s'étend entre le support 30 du dispositif de malaxage 26 et le carter externe 140, notamment la portion distale 140C du carter externe 140.

Le palier 152 comprend notamment au moins un roulement 154, en particulier à bille ou à rouleaux.

Notamment, le roulement 154 est à contact oblique et est configuré pour reprendre l'effort axial généré par le pion de malaxage 28 sur le substrat.

Le dispositif de lubrification 158 est configuré pour lubrifier le palier 152 s'étendant entre le dispositif de malaxage 26 et le carter externe 140.

Le dispositif de lubrification 158 comprend notamment une entrée de lubrifiant 160 et une sortie de lubrifiant (non-illustrée) reliée avantageusement à un dispositif d'aspiration en communication fluidique avec un chemin de roulement 155 du roulement 154.

Le dispositif de lubrification 158 comprend par exemple en outre une source de lubrifiant (non-illustrée) destinée à fournir du lubrifiant à l'entrée de lubrifiant 160.

Le dispositif de soufflage de gaz inerte 166 est configuré pour générer un flux de gaz inerte autour du pion de malaxage 28 du dispositif de malaxage 26 lors du malaxage de l'étiré 1.

En particulier, le dispositif de soufflage de gaz inerte 166 comprend une arrivée de gaz 168 en communication fluidique avec l'espace interne 142 délimité par le carter 140.

Le dispositif de soufflage de gaz inerte 166 comprend en outre une source de gaz inerte (non-illustrée) destinée à fournir du gaz inerte à l'arrivée de gaz 168.

Le dispositif 172 de refroidissement du dispositif de malaxage 26 comprend une couronne 174 s'étendant autour du carter externe 140, en particulier autour de la portion distale 140C du carter externe 140.

La couronne 174 délimite avec le carter externe 140, notamment avec la portion distale 140C du carter externe 140, un espace annulaire 178 de circulation d'un fluide de refroidissement.

Le dispositif de refroidissement 172 comprend en outre une arrivée de fluide 178 et une sortie de fluide 180 en communication fluidique avec l'espace annulaire 176.

Le dispositif de refroidissement 172 comprend en outre une source de fluide de refroidissement (non-illustrée) destinée à alimenter l'arrivée de fluide 178 en fluide de refroidissement.

Le dispositif 184 de refroidissement du dispositif d'actionnement 124 est notamment un dispositif de refroidissement de l'actionneur 128 du mécanisme d'actionnement 126.

Le dispositif de refroidissement 184 comprend une arrivée de fluide 186 et une sortie de fluide 188 en communication fluidique avec un espace annulaire s'étendant autour de l'actionneur 128.

Le dispositif de refroidissement 184 comprend en outre une source de fluide de refroidissement (non-illustrée) destinée à alimenter l'arrivée de fluide 186 en fluide de refroidissement.

L'au moins un capteur d'effort 156 est configuré pour mesurer une force d'appui générée par le pion de malaxage 28 sur un substrat.

Le dispositif 192 de guidage de l'effecteur 40 et du dispositif de malaxage 26 comprend :
- un socle 194 apte à être monté par exemple sur l'au moins un bras 208 du robot 206 ;
- au moins une embase 200 de l'effecteur 40 ; et
- au moins une barre de guidage 202.

Le socle 194 comprend par exemple deux bases 196 délimitant chacune un orifice traversant de guidage 198 s'étendant sensiblement parallèlement à l'axe longitudinal A-A'. Les deux orifices traversant de guidage 198 sont alignés et sont traversés par l'au moins une barre de guidage 202.

L'au moins une embase 200 de l'effecteur 40 est montée sur l'au moins une barre de guidage 202.

Le déplacement de l'au moins une barre de guidage 202 en translation parallèlement à l'axe longitudinal A-A' à travers les orifices traversant de guidage 198 entraîne le déplacement en translation parallèlement à l'axe longitudinal A-A' de l'effecteur 40.

Le robot 206 comprend au moins un bras articulé 208 et au moins un dispositif de motorisation 210 configuré pour déplacer l'au moins un bras articulé 208.

L'au moins un bras articulé 208 porte le système de fabrication 24.

L'au moins un bras 208 est déplaçable entre une pluralité de positions permettant d'agencer le pion de malaxage 28 de manière précise par rapport au substrat de l'objet manufacturé à fabriquer. Avantageusement, le robot 206 est configuré de sorte que la position et l'actionnement de l'au moins un bras 208 est asservie en fonction de la force d'appui mesurée par l'au moins un capteur d'effort 156.

Dans ce qui suit, on décrit le fonctionnement de l'installation 10.

A l'état initial, le système d'alimentation 12 alimente le système de fabrication 24 en étiré 1.

En particulier, le système d'alimentation 12 entraîne l'étiré 1 en rotation autour de sa fibre neutre.

Notamment, le dispositif de déroulement rotatif 14 entraîne la bobine 16 en rotation autour de l'axe de rotation principal R1 et entraîne l'étiré 1 déroulé en rotation autour de sa fibre neutre.

Par exemple, le dispositif de guidage 18 guide l'étiré 1 déroulé depuis le dispositif de déroulement rotatif 14 jusqu'au système de fabrication 24. Ce guidage est effectué de préférence sans que l'étiré 1 de matériau de fabrication déroulé soit débité.

L'étiré 1 pénètre alors dans l'effecteur 40.

En particulier, l'étiré 1 s'étend dans le passage tubulaire 132 de l'arbre 130 du mécanisme d'actionnement 126 depuis l'entrée axiale 42A du chemin 42 d'acheminement de l'étiré 1.

L'étiré 1 s'étend en outre dans le passage axial 50 de la base 48 du support 46 du mécanisme d'avance 44 ainsi que dans les passages coniques 88 respectifs des premier et deuxième organes de préhension 80, 116.

L'étiré 1 s'étend en outre dans le passage axial 34 du support 30 du dispositif de malaxage 26 jusqu'au pion de malaxage 28.

L'étiré 1 est entraîné en rotation autour de l'axe longitudinal A-A' (notamment autour de sa fibre neutre, puisque sa fibre neutre est alors confondue avec l'axe longitudinal A-A') par le mécanisme d'actionnement 126.

Le mécanisme d'avance 44 alterne alors entre sa première configuration et sa deuxième configuration pour déplacer l'étiré 1 de matériau de fabrication 1 en translation selon l'axe longitudinal A-A' dans la direction d'alimentation DA.

Selon une variante du premier mode de réalisation, le mécanisme d'actionnement 126 est configuré pour entraîner le mécanisme d'avance 44 et le pion de malaxage 28 en rotation autour de l'axe longitudinal A-A'. Dans cette variante, le premier dispositif de préhension 60 et le deuxième dispositif de préhension 100 comprennent chacun un actionneur permettant de placer le mécanisme d'avance 44 dans la première configuration ou dans la deuxième configuration.

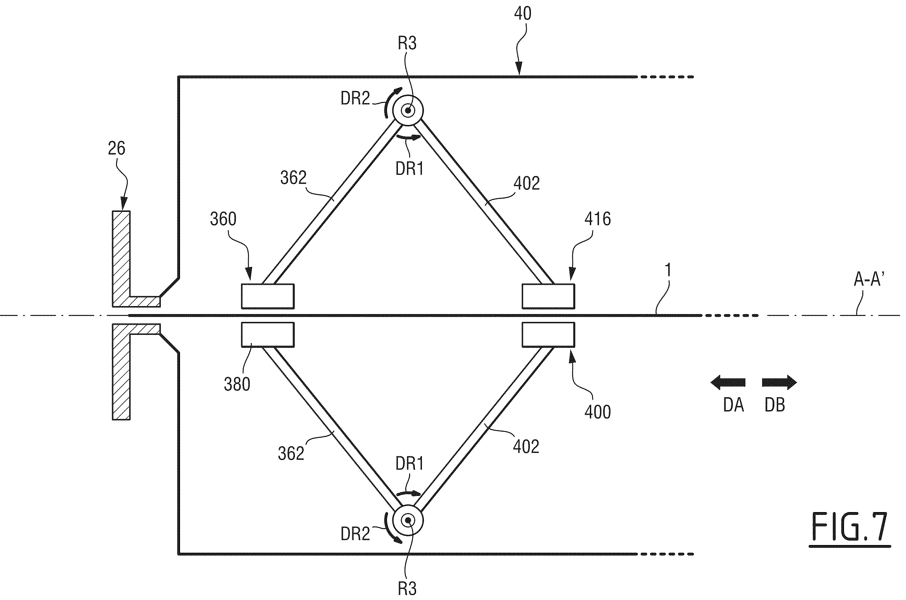

En référence à la figure 7, on décrit un deuxième mode de réalisation de l'invention.

Le deuxième mode de réalisation est identique au premier mode de réalisation hors mis concernant les caractéristiques suivantes.

Le premier dispositif de préhension 360 comprend au moins deux bielles 362 articulées chacune à une première extrémité à au moins un premier organe de préhension 380 et à une deuxième extrémité à au moins deux bielles 402 du deuxième dispositif de préhension 400.

Le deuxième dispositif de préhension 400 comprend au moins deux bielles 402 articulées chacune à une première extrémité à au moins un deuxième organe de préhension 416 et à une deuxième extrémité aux au moins deux bielles 362 du premier dispositif de préhension 360.

Chaque bielle 362 du premier dispositif de préhension 360 est articulée sur une bielle 402 correspondante du deuxième dispositif de préhension 400 selon un axe de rotation R3 s'étendant sensiblement perpendiculairement à l'axe longitudinal A-A'.

Les bielles 362 du premier dispositif de préhension 360 sont notamment articulées sur les bielles 402 du deuxième dispositif de préhension 400 en ciseau.

Notamment, les bielles et leurs articulations remplacent les crémaillères du premier mode de réalisation.

En particulier, pour chaque bielle 362, une rotation de ladite bielle 362 par rapport à la bielle correspondante 402 autour de l'axe de rotation R3 correspondant entraîne, dans un premier sens de rotation DR1, un rapprochement des organes de préhension 380, 416 l'un par rapport à l'autre et dans un deuxième sens de rotation DR2 opposé au premier sens de rotation DR1, un éloignement des organes de préhension 380, 416 l'un par rapport à l'autre.

Le mécanisme d'avance est notamment :
- dans la première configuration lorsque les bielles 362 tournent respectivement par rapport à la bielle 402 correspondante dans le premier sens de rotation DR1 autour de l'axe de rotation R3 ;
- dans la deuxième configuration lorsque les bielles 362 tournent respectivement par rapport à la bielle 402 dans le deuxième sens de rotation DR2 autour de l'axe de rotation R3.

Le sens de rotation alterne entre le premier sens de rotation DR1 et le deuxième sens de rotation DR2 pour déplacer l'étiré 1 de matériau de fabrication en translation selon l'axe longitudinal A-A' dans la direction d'alimentation DA. L'alternance du sens de rotation entre le premier sens de rotation DR1 et le deuxième sens de rotation DR2 entraîne l'alternance de configuration du mécanisme d'avance entre la première configuration et la deuxième configuration.

Dans le deuxième mode de réalisation, la mise en rotation de l'ensemble autour de l'axe longitudinal A-A' pourra lui se faire avec des barres traversantes semblables à celles utilisées dans le premier mode de réalisation. La motorisation en rotation et translation de l'ensemble pourra également se faire avec le même dispositif d'actionnement.

## Revendications

1. Système (24) de fabrication d'un objet manufacturé par fabrication additive par friction-malaxage à partir d'un étiré de matériau de fabrication (1) comprenant :
- un dispositif de malaxage (26) comprenant un pion de malaxage (28) destiné à malaxer l'étiré de matériau de fabrication (1) pour fabriquer l'objet manufacturé ;
- un effecteur (40) configuré pour entraîner en rotation le pion de malaxage (28) et pour alimenter le pion de malaxage (28) en étiré de matériau de fabrication (1) par translation de l'étiré de matériau de fabrication (1) selon un axe longitudinal (A-A') de l'effecteur (40) dans une direction d'alimentation (DA) ;
l'effecteur (40) comprenant un dispositif d'actionnement (124) comportant un mécanisme (44) d'avance de l'étiré de matériau de fabrication (1), le mécanisme d'avance (44) comprenant un premier dispositif de préhension (60 ; 360) et un deuxième dispositif de préhension (100 ; 400),
le mécanisme d'avance (44) étant configurable dans :
a) une première configuration dans laquelle au moins un premier organe de préhension (80 ; 380) du premier dispositif de préhension (60 ; 360) saisit l'étiré (1) et le déplace dans la direction d'alimentation (DA) pendant qu'au moins un deuxième organe de préhension (116 ; 416) du deuxième dispositif de préhension (100 ; 400) lâche l'étiré (1) et se déplace dans une direction (DB) opposée à la direction d'alimentation (DA) ;
b) une deuxième configuration dans laquelle l'au moins un deuxième organe de préhension (116 ; 416) saisit l'étiré (1) et le déplace dans la direction d'alimentation (DA) pendant que l'au moins un premier organe de préhension (80 ; 380) lâche l'étiré (1) et se déplace dans la direction (DB) opposée à la direction d'alimentation (DA) ;
le mécanisme d'avance (44) étant destiné à alterner entre la première configuration et la deuxième configuration pour déplacer l'étiré de matériau de fabrication (1) en translation selon l'axe longitudinal (A-A') dans la direction d'alimentation (DA).

2. Système (24) selon la revendication 1, dans lequel :
- l'au moins un premier organe de préhension (80 ; 380) est déplaçable en translation selon l'axe longitudinal (A-A') entre une première coordonnée proximale (CP1) et une première coordonnée distale (CD1) ;
- l'au moins un deuxième organe de préhension (116 ; 416) est déplaçable en translation selon l'axe longitudinal (A-A') entre une deuxième coordonnée proximale (CP2) et une deuxième coordonnée distale (CD2) ;
la première coordonnée proximale (CP1) étant située en aval de la deuxième coordonnée distale (CD2) selon la direction d'alimentation (DA).

3. Système (24) selon la revendication 1 ou 2, dans lequel l'au moins un premier et l'au moins un deuxième organes de préhension (80, 116) sont des pinces configurables en :
- configuration de serrage, dans laquelle les pinces serrent l'étiré ; et
- configuration de libération, dans laquelle les pinces libèrent l'étiré ;
les pinces étant dans :
- la configuration de serrage lorsque l'organe de préhension (80, 116) correspondant est déplacé dans la direction d'alimentation (DA) ; et
- la configuration de libération lorsque l'organe de préhension (80, 116) correspondant est déplacé dans la direction (DB) opposée à la direction d'alimentation (DA).

4. Système (24) selon la revendication 3, dans lequel les pinces comprennent chacune :
- une base (82) comportant une jupe cylindrique (84), la jupe cylindrique (84) comprenant une surface interne conique (86) définissant un passage conique (88) s'étendant sensiblement selon l'axe longitudinal (A-A') et à travers lequel l'étiré (1) est destiné à s'étendre ;
- au moins deux éléments de serrage (90) s'étendant au moins en partie dans le passage conique (88) entre la surface interne conique (86) de la jupe cylindrique (84) et l'étiré (1), chaque élément de serrage (90) comprenant une surface externe conique (92) sensiblement complémentaire de la surface interne conique (86) de la jupe cylindrique (84) ;
- un élément de contrainte (94) apte à contraindre les au moins deux éléments de serrage (90) contre la jupe cylindrique (84) ;
chaque pince étant telle que :
- dans la configuration de serrage, l'élément de contrainte (94) contraint les au moins deux éléments de serrage (90) contre la jupe cylindrique (84) de sorte que chaque élément de serrage (90) est contraint contre l'étiré (1) pour serrer l'étiré (1) ;
- dans la configuration de libération, l'élément de contrainte (94) réduit sa contrainte sur les au moins deux éléments de serrage (90) de sorte que chaque élément de serrage (90) relâche l'étiré (1).

5. Système (24) selon la revendication 4, dans lequel les éléments de serrage (90) comprennent une surface interne (90A) destinée à être en regard de l'étiré (1) et à coopérer avec l'étiré (1) dans la configuration de serrage, la surface interne (90A) de chaque élément de serrage (90) comprenant des dents (91) aptes à accrocher l'étirer (1).

6. Système (24) selon la revendication 4 ou 5, dans lequel les éléments de serrage (90) sont répartis angulairement autour de l'axe longitudinal (A-A').

7. Système (24) selon l'une quelconque des revendications précédentes, dans lequel :
- le premier dispositif de préhension (60) comporte en outre :
- une première bride distale (62) sur laquelle est monté l'au moins un premier organe de préhension (80 ; 380) ;
- au moins une première crémaillère (78) montée sur la première bride distale (62) et s'étendant sensiblement parallèlement à l'axe longitudinal (A-A') ;
- le deuxième dispositif de préhension (100) comporte en outre :
- une deuxième bride distale (102) sur laquelle est monté l'au moins un deuxième organe de préhension (116 ; 416) ;
- au moins une deuxième crémaillère (112) montée sur la deuxième bride distale (102) et s'étendant sensiblement parallèlement à l'axe longitudinal (A-A') ;
- le mécanisme d'avance (44) comprend en outre au moins une roue dentée (120), chaque roue dentée (120) comprenant des dents (122) coopérant avec des dents (79) de la première crémaillère (78) correspondante et des dents (113) de la deuxième crémaillère (112) correspondante, chaque roue dentée (120) étant mobile en rotation selon un axe de rotation (R2) sensiblement perpendiculaire à un plan comprenant l'axe longitudinal (A-A') ;
- le dispositif d'actionnement (124) comprend en outre un mécanisme d'actionnement (126) configurable entre :
- une première configuration dans laquelle le mécanisme d'actionnement (126) déplace l'au moins une deuxième crémaillère (112) en translation dans la direction (DB) opposée à la direction d'alimentation (DA) pour déplacer simultanément :
- le deuxième dispositif de préhension (100) dans la direction (DB) opposée à la direction d'alimentation (DA) ;
- le premier dispositif de préhension (60) dans la direction d'alimentation (DA), par coopération de l'au moins une deuxième crémaillère (112) avec l'au moins une première crémaillère (78) par l'intermédiaire de l'au moins une roue dentée (120) ;
- une deuxième configuration dans laquelle le mécanisme d'actionnement (126) déplace l'au moins une deuxième crémaillère (112) en translation dans la direction d'alimentation (DA) pour déplacer simultanément :
- le deuxième dispositif de préhension (100) dans la direction d'alimentation (DA) ;
- le premier dispositif de préhension (60) dans la direction (DB) opposée à la direction d'alimentation (DA), par coopération de l'au moins une deuxième crémaillère (112) avec l'au moins une première crémaillère (78) par l'intermédiaire de l'au moins une roue dentée (120) ;
le mécanisme d'avance (44) étant :
- dans sa première configuration lorsque le mécanisme d'actionnement (126) est dans sa première configuration ;
- dans sa deuxième configuration lorsque le mécanisme d'actionnement (126) est dans sa deuxième configuration ;
le mécanisme d'actionnement (126) étant configuré pour alterner entre sa première et sa deuxième configuration pour déplacer l'étiré de matériau de fabrication (1) en translation selon l'axe longitudinal (A-A') dans la direction d'alimentation (DA).

8. Système (24) selon la revendication 7, dans lequel :
- le premier dispositif de préhension (60) comporte en outre une première bride proximale (70), l'au moins une première crémaillère (78) étant montée en outre sur la première bride proximale (70) ;
- le deuxième dispositif de préhension (100) comporte en outre une deuxième bride proximale (110), l'au moins une deuxième crémaillère (112) étant montée en outre sur la deuxième bride proximale (110) ;
la première bride proximale (70) comprenant un corps annulaire (72) délimitant un passage axial (74) traversé par le deuxième dispositif de préhension (100 ; 400).

9. Système (24) selon la revendication 7 ou 8, dans lequel le mécanisme d'avance (44) comprend un support (46) fixe en translation selon l'axe longitudinal (A-A'), comportant une jupe (56) s'étendant sensiblement selon l'axe longitudinal (A-A'), la jupe (56) du support fixe (46) s'étendant radialement entre le premier dispositif de préhension (60) et le deuxième dispositif de préhension (100), chaque roue dentée (120) étant montée sur la jupe (56) du support fixe (46).

10. Système (24) selon l'une quelconque des revendications précédentes, dans lequel le mécanisme d'actionnement (126) du dispositif d'actionnement (124) est en outre configuré pour entraîner le mécanisme d'avance (44) et le pion de malaxage (28) en rotation autour de l'axe longitudinal (A-A').

11. Système (24) selon la revendication 10, dans lequel le mécanisme d'actionnement (126) comprend :
- un actionneur (128) ;
- un arbre (130) s'étendant sensiblement selon l'axe longitudinal (A-A') et apte à être entraîné en rotation autour de l'axe longitudinal (A-A') et en translation selon l'axe longitudinal (A-A') par l'actionneur (128) ;
- un flasque (134) monté sur l'arbre (130) et s'étendant sensiblement perpendiculairement à l'axe longitudinal (A-A') ;
- au moins une tige (136) solidaire en rotation du flasque (134) et s'étendant sensiblement parallèlement à l'axe longitudinal (A-A') à travers le premier dispositif de préhension (60), à travers le deuxième dispositif de préhension (100) et au moins en partie à travers le dispositif de malaxage (26) ;
le mécanisme d'avance (44) et le pion de malaxage (28) étant aptes à être entraînés en rotation autour de l'axe longitudinal (A-A') par la rotation de l'au moins une tige (136) autour de l'axe longitudinale (A-A').

12. Système (24) selon la revendication 11 lorsque prise en combinaison avec l'une quelconque des revendications 7 à 9, dans lequel l'au moins une deuxième crémaillère (112) est montée sur le flasque (134), le mécanisme d'actionnement (126) étant tel que :
- dans la première configuration du mécanisme d'actionnement (126), l'actionneur (128) entraîne l'au moins une deuxième crémaillère (112) en translation dans la direction (DB) opposée à la direction d'alimentation (DA) en déplaçant l'arbre (130) et le flasque (134) en translation dans la direction (DB) opposée à la direction d'alimentation (DA) ;
- dans la deuxième configuration du mécanisme d'actionnement (126), l'actionneur (128) entraîne l'au moins une deuxième crémaillère (112) en translation dans la direction d'alimentation (DA) en déplaçant l'arbre (130) et le flasque (134) en translation dans la direction d'alimentation (DA).

13. Système (24) selon l'une quelconque des revendications 10 à 12, dans lequel le mécanisme d'actionnement (126) est configuré pour entraîner les premier et deuxième dispositifs de préhension (60, 100) en rotation autour de l'axe longitudinal (A-A'), et dans lequel :
- l'étiré (1) est destiné à être entraîné en rotation autour de sa fibre neutre par l'au moins un premier organe de préhension (80 ; 380) dans la première configuration du mécanisme d'avance (44) ;
- l'étiré (1) est destiné à être entraîné en rotation autour de sa fibre neutre par l'au moins un deuxième organe de préhension (116 ; 416) dans la deuxième configuration du mécanisme d'avance (44).

14. Système (24) selon l'une quelconque des revendications précédentes, dans lequel l'effecteur (40) comprend en outre :
- un carter externe (140) délimitant un espace interne (142) dans lequel s'étend le mécanisme d'avance (44) ;
- un palier (146) s'étendant entre le mécanisme d'avance (44) et le carter externe (140) et configuré pour guider le mécanisme d'avance (44) en rotation par rapport au carter externe (140).

15. Système (24) selon la revendication 14, dans lequel l'effecteur (40) comprend en outre un palier (152) s'étendant entre le dispositif de malaxage (26) et le carter externe (140) et configuré pour guider le dispositif de malaxage (26) en rotation par rapport au carter externe (140).

16. Système (24) selon l'une quelconque des revendications précédentes, dans lequel l'effecteur (40) comprend en outre au moins un capteur d'effort (156) configuré pour mesurer une force d'appui générée par le pion de malaxage (28) sur un substrat.

17. Installation (10) de fabrication d'un objet manufacturé, comprenant :
- un système de fabrication (24) selon l'une quelconque des revendications précédentes ;
- un système d'alimentation (12) configuré pour alimenter le système de fabrication (24) en étiré de matériau de fabrication (1) ;
le système d'alimentation (12) étant configuré pour entraîner l'étiré (1) en rotation autour de sa fibre neutre.

18. Installation (10) selon la revendication 17, dans lequel le système d'alimentation (12) comprend :
- une bobine (16) d'étiré de matériau de fabrication ;
- un dispositif de déroulement rotatif (14) configuré pour dérouler l'étiré (1) de matériau de fabrication depuis la bobine (16) ;
- un dispositif (18) de guidage de l'étiré (1) de matériau de fabrication déroulé sans être débité depuis le dispositif de déroulement rotatif (14) jusqu'au système de fabrication (24), le dispositif de déroulement rotatif (14) étant configuré pour entraîner la bobine (16) en rotation autour d'un axe de rotation principal (R1) et pour entraîner l'étiré (1) déroulé en rotation autour de sa fibre neutre.

19. Installation (10) selon la revendication 18, dans lequel une différence entre la vitesse de rotation de la bobine (16) générée par le système d'alimentation (12) de l'installation (10) et la vitesse de rotation de l'étiré (1) générée par l'effecteur (40) est comprise entre 0,5 tr/min et 5 tr/min lorsque l'étiré 1 est malaxé par le système de fabrication.
